# EUROPÄISCHE PATENTSCHRIFT

(11) **EP 0 933 286 B1**
(45) Veröffentlichungstag und Bekanntmachung des Hinweises auf die Patenterteilung: **04.12.2002**
(21) Anmeldenummer: 99890010.4
(22) Anmeldetag: 21.01.1999
(51) Int. Cl.: B62D 43/02

(54) **Haltevorrichtung für Kraftfahrzeugreserverad**
Fixing device for vehicle spare tyre
Dispositif d'immobilisation d'une roue de secours de véhicule automobile

(30) Priorität: 22.01.1998 AT 2998 U
(43) Veröffentlichungstag der Anmeldung: 04.08.1999
(73) Patentinhaber: Tauss, Johann, 2345 Brunn am Gebirge (AT)
(72) Erfinder: Tauss, Johann, 2345 Brunn am Gebirge (AT)
(74) Vertreter: Babeluk, Michael, Dipl.-Ing. Mag.

(56) Entgegenhaltungen:
- JP-A- 8 192 692
- US-A- 5 462 211
- PATENT ABSTRACTS OF JAPAN vol. 1998, no. 08, 30. Juni 1998 (1998-06-30) & JP 10 059082 A (INTER TEC:KK), 3. März 1998 (1998-03-03)

## Beschreibung

Die vorliegende Erfindung betrifft eine Haltevorrichtung für Kraftfahrzeuge, die an einem außen angebrachten Reserverad oder gemeinsam mit dem Reserverad am Kraftfahrzeug zu befestigen ist.

In vielen Fällen besteht die Notwendigkeit, verschiedene Haltevorrichtungen an Kraftfahrzeugen anzubringen, um Gegenstände befördern zu können, die aufgrund ihrer Abmessungen oder aus sonstigen Gründen nicht im Inneren des Kraftfahrzeuges befördert werden können. Es handelt sich dabei beispielsweise um Haltevorrichtungen zum Transport von Fahrrädern, Skiern oder um Wannen oder Körbe zum Transport von Wild, Heu oder anderem Futter. So ist es in der Jägerschaft nicht unbedingt erwünscht, das erlegte Wild im Inneren eines Kraftfahrzeuges zu transportieren, da die Verschmutzungsgefahr sehr groß ist. Durch den Transport in einer entsprechenden Wanne oder einem Gitterkorb, die außen am Kraftfahrzeug befestigt ist, kann dieses Problem vermieden werden.

Aus der US 5 137 192 ist eine Haltevorrichtung bekannt, die an der Halterung für das Reserverad eines Geländewagens befestigbar ist. Dabei wird ein Flanschteil zwischen der Halterung am Kraftfahrzeug und dem Reserverad gemeinsam mit diesem angeschraubt. An dem Flanschteil ist ein Rohr befestigt, das durch eine zentrale Öffnung des Reserverades hindurchragt, und in das ein rohrförmiges Ende eines entsprechenden Tragteiles einführbar ist. Mit einer Schraube wird der Tragteil letztlich befestigt. Diese bekannte Lösung ermöglicht das Anbringen von Haltevorrichtungen an Kraftfahrzeugen, ohne zusätzliche Befestigungspunkte an der Karosserie schaffen zu müssen. Besonders bei Geländewagen sind die Halterungen für Reserveräder allgemein sehr robust ausgeführt, so daß das Anbringen einer zusätzlichen Last im allgemeinen unproblematisch ist. Durch die Erschütterungen während der Fahrt und die Stöße insbesondere bei der Fahrt im Gelände kann es jedoch zu Schwingungen und Belastungen des Tragteils kommen, was zur Geräuschentwicklung führt. Außerdem ist die Rohrverbindung zwischen dem Flanschteil und dem Tragteil festigkeitsmäßig problematisch, da eine Gewichtsbelastung zu einer Biegebeanspruchung in diesem Teil führt.

Weiters ist aus der US 5 469 998 eine Halterung für ein Reserverad bekannt, die ein Herunterklappen des Reserverades ermöglicht. An dieser Halterung kann auch ein Tragteil, etwa für ein Fahrrad, befestigt werden. Auch bei dieser Lösung ist ein Flanschteil vorgesehen, der zwischen Kraftfahrzeug und Reserverad gemeinsam mit diesem an das Kraftfahrzeug angeschraubt wird. Auch bei dieser Lösung ergeben sich im wesentlichen die gleichen Probleme wie bei der obigen Vorrichtung.

Die US 5 118 017 A zeigt einen Gepäcksbehälter, der an einer Reserveradhalterung anschraubbar ist. Die Rückseite des Gepäcksbehälters stützt sich dabei am Reserverad ab. Die Verwendung unterschiedlicher Tragteile ist mit einer solchen Lösung nicht ohne weiteres möglich, daher sind der Variabilität enge Grenzen gesetzt. Die US 5 462 211 A zeigt eine gattungsgemäße Halte vorrichtung Aufgabe der vorliegenden Erfindung ist es, eine Haltevorrichtung so weiterzubilden, daß mit einfachen Mitteln eine sichere Befestigung unterschiedlicher Tragteile an der Basisplatte der Haltevorrichtung möglich ist.

Erfindungsgemäß wird diese Aufgabe durch die Kennzeichnenden Merkmale des Anspruchs 1 gelöst.

Ein wesentlicher Aspekt der Erfindung ist die Vielseitigkeit der Verwendung der erfindungsgemäßen Haltevorrichtung. Es können in einfacher Weise verschiedene Tragteile an der Platte befestigt werden, je nach dem, welche Güter zu transportieren sind. Der Tragteil kann dabei etwa als Wanne oder als Aufnahmerahmen für eine Wanne oder einen Gitterkorb zum Transportieren von Wild ausgebildet sein, er kann als Halterung zum Transport von Fahrrädern, Skiern oder anderen Lasten ausgebildet sein.

In einer Ausführungsvariante der Erfindung ist vorgesehen, daß sich die Platte am Felgenrand des Reserverades abstützt. Alternativ dazu ist es jedoch auch möglich, daß sich die Platte am Reifen des Reserverades abstützt. Wenn sich die Platte auf der Felge selbst abstützt, können große Kräfte und Momente übertragen werden, ohne eine Bewegung der Platte zu verursachen. Bei der Abstützung an der Flanke des Reifens wird der Reifen des Reserverades als Dämpfungselement verwendet, wie dies beispielsweise bei der Motorlagerung der Fall ist. Auf diese Weise kann eine geringfügige Bewegung der Platte der Haltevorrichtung zugelassen werden, die jedoch zufolge der Dämpfung durch den Reifengummi zu keiner Geräuschentwicklung führen kann.

In einer besonders bevorzugten Ausführungsvariante der Erfindung ist vorgesehen, daß das Befestigungselement für die Platte als Stange oder Rohr ausgebildet ist, das einen Flansch aufweist, der gemeinsam mit dem Reserverad an dem Kraftfahrzeug angeschraubt ist, und daß auf die Stange oder das Rohr ein Rohr aufschiebbar und befestigbar ist, das einstückig mit der Platte verbunden ist. Dadurch ist auch das Befestigen und Abnehmen der Platte in einfacher Weise möglich. Unterschiedlich zu den oben beschriebenen bekannten Vorrichtungen ist jedoch, daß sich der Flansch des Befestigungselements auf der Außenseite des Reserverades abstützt. Dies besitzt den besonderen Vorteil, daß auch bei der Erstmontage der erfindungsgemäßen Haltevorrichtung das Reserverad nicht abgenommen werden muß.

Um eine Verwendung ein und derselben Haltevorrichtung auch für verschiedene Kraftfahrzeugtypen mit unterschiedlichen Dimensionen von Reserverädern zu ermöglichen, kann vorgesehen sein, daß das Befestigungselement teleskopartig ausziehbar ist.

In einer alternativen Ausführungsvariante der Erfindung ist vorgesehen, daß das Befestigungselement für die Platte den Reifen des Reserverades umfaßt und an diesem befestigt ist. Zum Unterschied zu der oben beschriebenen Ausführungsvariante erfolgt dabei die eigentliche Befestigung der Platte nicht im zentralen Bereich des Reserverades, sondern an seinem äußeren Umfang in der Art von Reserveradabdeckungen, die mit einem Spannverschluß auf das Reserverad aufziehbar sind.

Vorzugsweise sind die Kupplungselemente der Platte als Ausnehmungen zum Einhängen der Tragteile ausgebildet. In einfacher Weise können dabei verschiedene Typen von Tragvorrichtungen eingehängt werden.

Alternativ dazu können die Kupplungsclemente als Bolzen, Laschen oder Führungsschienen ausgebildet sein. Vorteilhaft ist dabei, daß kein Staub oder Schmutz durch die Platte hindurch eindringen kann.

Eine besonders formschöne Ausführungsvariante der vorliegenden Erfindung ergibt sich dadurch, daß die Platte als Abdeckung für das Reserverad ausgebildet ist. An sich ist es durch die vorliegende Erfindung möglich, eine handelsübliche Reserveradabdeckung zu befestigen, wenn der entsprechende Tragteil abgenommen ist, da die Platte nicht oder nur unwesentlich über die Außenkontur des Reserverades vorsteht. Auf die Reserveradabdeckung kann jedoch auch verzichtet werden, wenn die Platte durch ihre Oberflächenstruktur und Ausführung als Reserveradabdeckung ausgebildet ist. Dabei kann die Platte etwa auch als Träger von Werbeaufschriften und dgl. verwendet werden.

In der Folge wird die vorliegende Erfindung anhand der in den Figuren dargestellten Ausführungsbcispiele näher erläutert.

Die Figuren zeigen:
- Fig. 1: eine erste Ausführungsvariante der vorliegenden Erfindung im Schnitt,
- Fig. 2: eine weitere Ausführungsvariante in einem Schnitt entsprechend der Fig. 1,
- Fig. 3: und 4 Ansichten von Platten entsprechend verschiedener Ausführungsvarianten der Erfindung, und die
- Fig. 5: und 6 weitere Ausführungsvarianten der Erfindung.

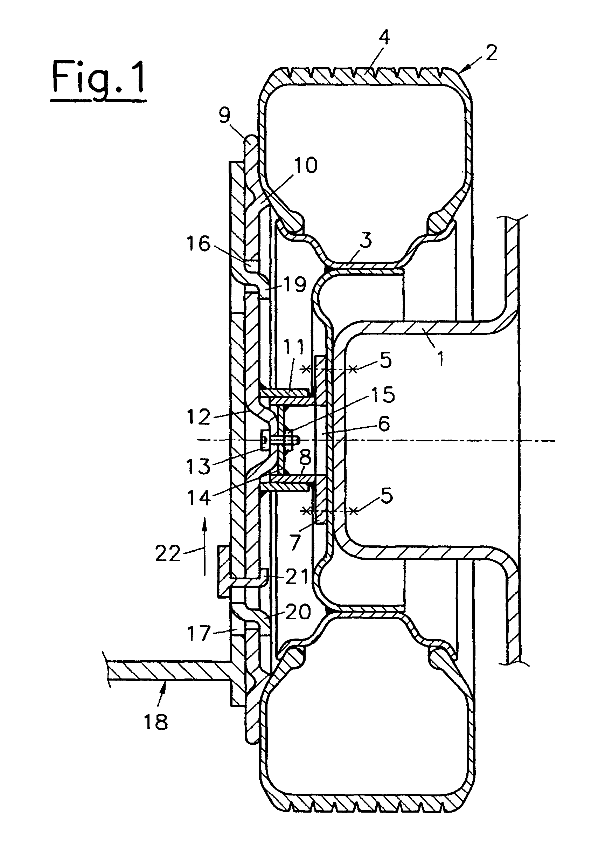

In der Fig. 1 ist mit 1 ein Karosserieteil eines Kraftfahrzeuges bezeichnet, der die Halterung für ein Reserverad 2 darstellt. Das Reserverad 2 besteht aus einer Felge 3 und einem Reifen 4. Die Felge 3 des Reserverades 2 ist mit schematisch dargestellten Schrauben 5 an der Halterung 1 befestigt. Außerhalb der Felge 3 und gemeinsam mit dieser ist ein Flanschteil 6 mit den Schrauben 5 an der Halterung 1 angeschraubt. Der Flanschteil 6 besteht aus einem Flanschabschnitt 7, an dem ein Rohrabschnitt 8 angeschweißt ist.

Am Reifen 4 des Reserverades 2 stützt sich eine Platte 9 entlang des gesamten Umfangs ab. Die Platte 9 besitzt eine Sicke 10 etwa im Bereich einer inneren Verjüngung des Reifens 4. Diese Sicke 10 bewirkt einerseits eine Versteifung der Platte 9 und andererseits eine Zentrierung am Reifen 4. Im mittleren Bereich der Platte 9 ist ein Rohrabschnitt 11 angeschweißt, der auf den Rohrabschnitt 8 des Flanschteils 6 aufgeschoben ist. In einer Ausnehmung 12 im mittleren Bereich der Platte 9 ist eine Schraube 13 vorgesehen, die beispielsweise als Imbusschraube ausgeführt ist. Durch die Schraube 13 ist es möglich, die Platte 9 an einem Steg 14 des Flanschteils 6 zu verschrauben. Zu diesem Zweck ist eines Mutter 15 auf der Rückseite des Steges 14 angeschweißt. Durch das Festziehen der Schraube 13 wird in der Platte 9 eine Vorspannung erzeugt, so daß diese fest entlang des Umfangs des Reifens 4 an diesen angedrückt wird. Über die Schraube 13 wird dabei im wesentlichen nur eine Zugkraft übertragen.

Falls die Haltevorrichtung für unterschiedliche Dimensionen von Reserverädern verwendbar sein soll, kann der Flanschteil teleskopartig ausgeführt sein.

Die Platte 9 besitzt Ausnehmungen 16, 17 als Kupplungselemente, um darin einen nur andeutungsweise dargestellten Tragteil 18 einhängen zu können. Zu diesem Zweck sind im Tragteil 18 entsprechende Haken 19, 20 ausgebildet. Mit einem Spannhaken 21, der in der Richtung des Pfeils 22 etwa durch einen nicht dargestellten Kniehebelverschluß verspannt werden kann, wird eine sichere Verankerung des Tragteils 18 auf der Platte 9 erreicht. Auf diese Weise können sehr leicht Tragteile 18 mit unterschiedlichen Funktionen je nach Bedarf an der Platte 9 angekoppelt werden. Es ist dabei möglich, diese Tragteile mit einer Wanne zur Aufnahme von Wild, zum Halten von Fahrrädern, zum Transport von Skiern u. dgl. mehr auszubilden. Eine Belastung, die auf den Tragteil 18 wirkt, erzeugt allgemein ein Drehmoment, das auf die Platte 9 übertragen wird. Durch den großen Umfang des Abschnitts der Abstützung der Platte 9 am Reifen 4 des Reserverades 2 stehen diesem Drehmoment jedoch relativ große Hebelarme gegenüber, so daß ein sicherer Halt erzielt werden kann. Weiters stellt der Reifen 4 des Reserverades 2 gleichzeitig ein Dämpfungselement für die Platte 9 dar.

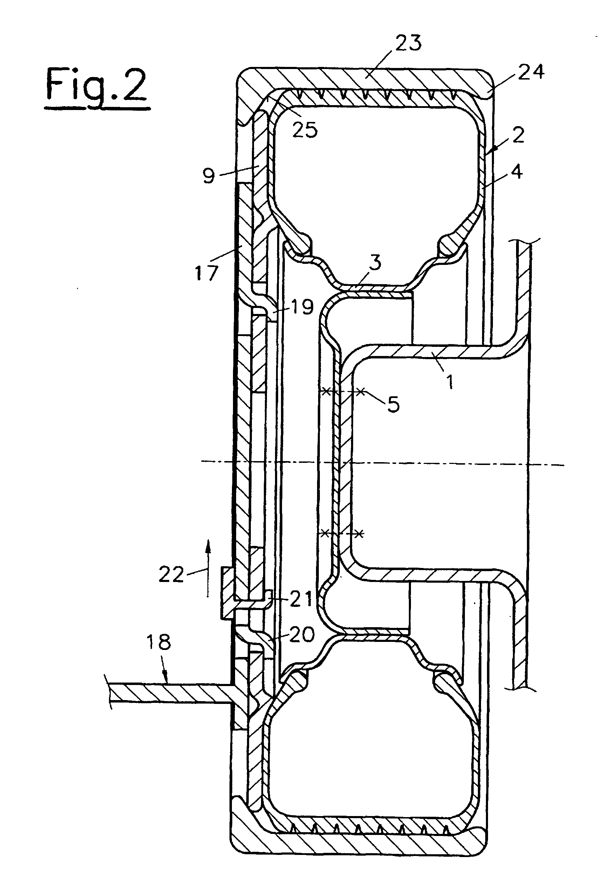

Die Ausführungsvariante der Fig. 2 ist in der Art der Abstützung der Platte 9 am Reifen 4 des Reserverades 2 ähnlich der oben beschriebenen ersten Ausführungsvariante. Unterschiedlich dabei ist jedoch, daß die Befestigung des Reserverades 2 durch die Schrauben 5 durch die Montage der erfindungsgemäßen Vorrichtung nicht berührt wird. Die Platte 9 wird bei dieser Ausführungsvariante durch einen Halteteil 23 gehalten, der sich um den äußeren Umfang des Reifens 4 herum erstreckt. Ein Wulst 24 hintergreift dabei den Reifen 4. Durch ein nicht dargestelltes Spannelement wird der Halteteil 23 in Umfangsrichtung gespannt, um fest in den Übergangsbereichen von der Lauffläche des Reifens 4 an den Flanken anzuliegen. Der äußere Umfang der Platte 9 wird durch dieses Verspannen entlang einer abgeschrägten Fläche 25 an den Reifen 4 angedrückt. Auf diese Weise wird ein sicherer Sitz der Platte 9 erreicht. Die Befestigung des Tragteils 18 kann wie bei der obigen Ausführungsvariante erfolgen.

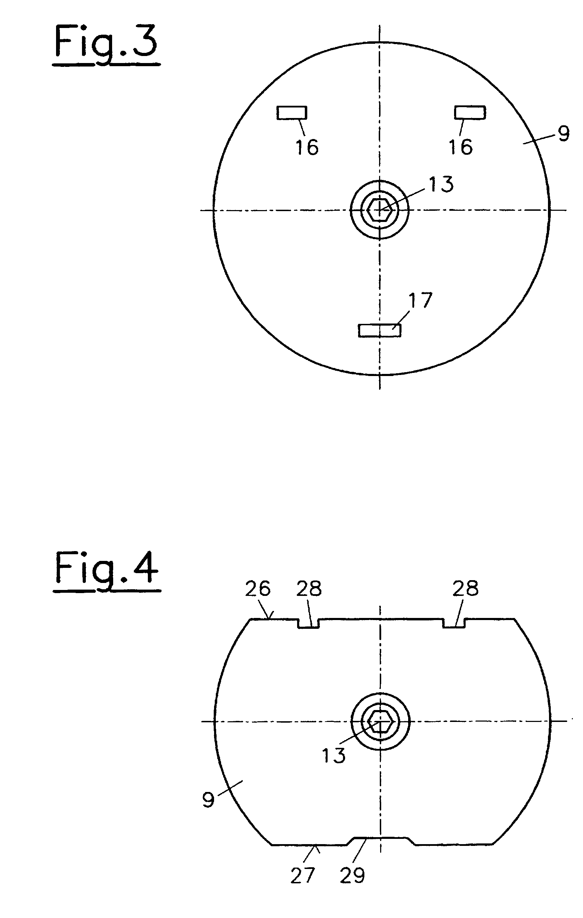

In den Fig. 3 und 4 sind schematisch mögliche Ausführungen der Platte 9 in Ansichten dargestellt. Bei der Ausführungsvariante von Fig. 3 sind zwei obere Öffnungen 16 und eine untere Öffnung 17 vorgesehen, die zur Aufnahme von Haken 19 bzw. 20 von Tragteilen 18 dienen. Die Platte 9 ist dabei als kreisförmige Scheibe ausgebildet, die sich entlang ihres gesamten Umfangs am Reifen 4 oder an der Felge 3 des Reserverades 2 abstützen kann.

Bei der Ausführungsvariante der Fig. 4 ist die Platte 9 als Teil einer Kreisscheibe ausgebildet, wobei der obere Rand durch einen geraden Abschnitt 26 und der untere Rand durch einen geraden Abschnitt 27 gebildet ist. Im oberen geraden Abschnitt 26 sind zwei Vertiefungen 28 zur Aufnahme von Befestigungshaken vorgesehen, während am unteren geraden Abschnitt 27 eine Vertiefung 29 ausgebildet ist, um einen entsprechenden Befestigungshaken eines Tragteils aufzunehmen.

Die Platten 9 der Fig. 3 und 4 können auch auf einem nicht dargestellten Rohrrahmen befestigt sein.

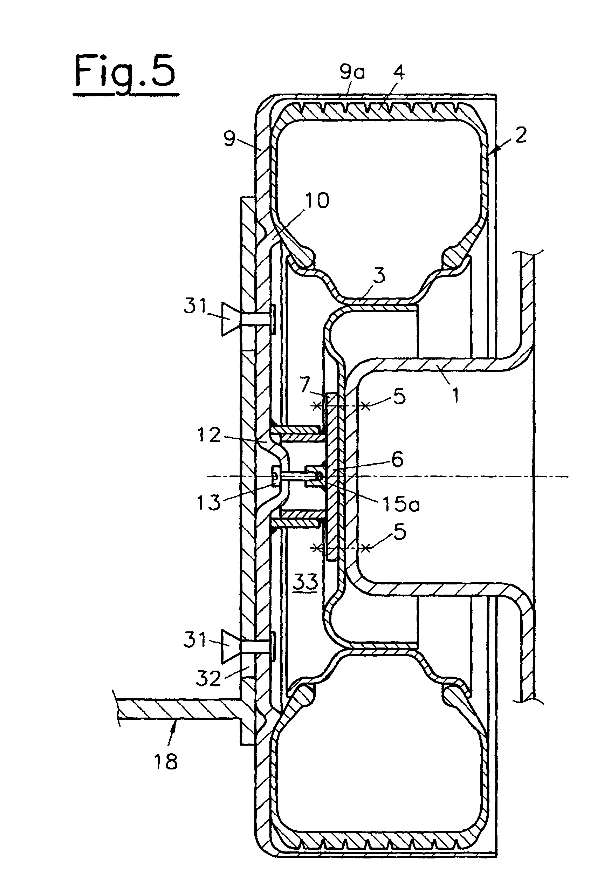

Die Ausführungsvariante der Fig. 5 entspricht im wesentlichen der Ausführungsvariante, die in der Fig. 1 dargestellt ist. Unterschiedlich dabei ist jedoch, daß an der Platte 9 radial außerhalb des Reifens 4 ein zylindrischer Abschnitt 9a einstückig angeformt ist, der das gesamte Reserverad 2 nicht nur an der Stirnseite sondern auch in Umfangsrichtung abdeckt. Die Platte 9 bildet damit eine Reserveradumhüllung an allen sichtbaren Seiten. In funktioneller Hinsicht unterscheidet sich die Ausführungsvariante der Fig. 5 dadurch, daß an der Platte 9 Bolzen 31 befestigt sind, die nach außen hin vorstehen. An diesem Bolzen 31, die sich nach außen hin kegelförmig erweitern, kann der Tragteil 18, der mit entsprechenden Ausnehmungen 32 versehen ist, eingehängt werden. Da die Platte 9 am gesamten Umfang des Reifens 4 mit Druck anliegt, ist damit eine vollständige Abdichtung des Raumes 33 zwischen der Platte 9 und der Felge 3 gegeben, da die Platte 9 keinerlei Ausnehmungen, Bohrungen und dgl. aufweist. Das Eindringen von Schmutz, Feuchtigkeit und dgl. zur Felge 3 hin kann auf diese Weise auch dann verhindert werden, wenn keine sonstige Reserveradabdeckung angebracht ist. Alternativ zu den Bolzen 31 können auch Laschen vorgesehen sein. Anstelle der Bolzen 31 können ferner auch Schrauben vorgesehen sein, die mit der Platte 9 verschweißt sind und die durch die Ausnehmung 32 vorstehen. Nicht dargestellte Muttern können zur Befestigung des Tragteils 18 dienen.

Ein weiterer Unterschied dieser Ausführungsvariante zu der oben beschriebenen Ausführungsvariante von Fig. 1 ist, daß die Befestigung der Platte 9 teleskopartig ausgeführt ist. Die Schraube 13 zur Befestigung der Platte 9 ist insbesonders an einer Mutter 15a ausgeführt, wobei die Begrenzung des Eindrehens der Schraube 13 nur durch die Kraft gegeben ist, die der Reifen 4 der Platte 9 entgegensetzt. Bei dieser Ausführungsvariante können auch bei Vorliegen gewisser Unterschiede der Reifendimension die entsprechenden Andruckkräfte der Platte 9 am Reifen 4 erzielt werden. Gegebenenfalls kann durch die eine Schraube 13 unterschiedlicher Länge eine Anpassung an eine andere Reifendimension erfolgen.

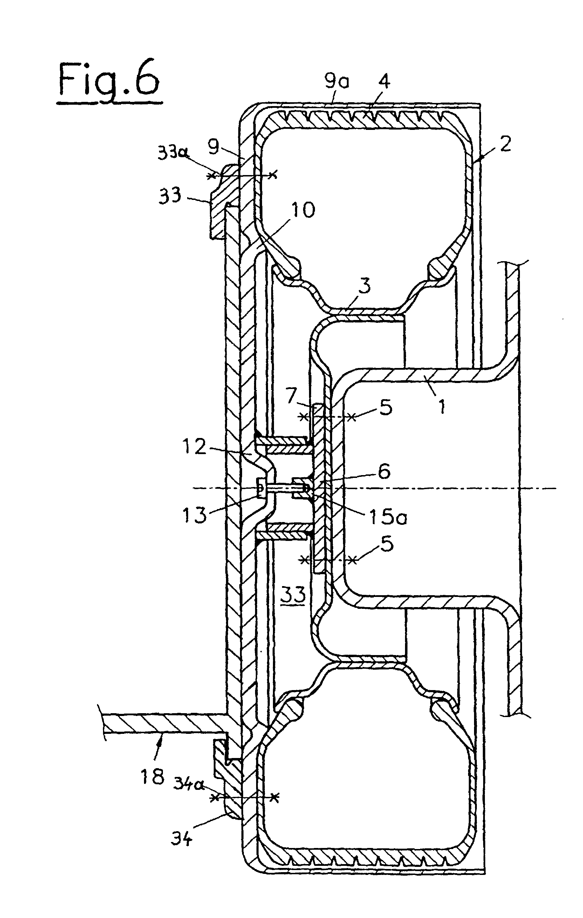

Die Ausführungsvariante der Fig. 6 entspricht im wesentlichen der von Fig. 5 mit dem Unterschied, daß der Tragteil 18 im oberen und im unteren Bereich durch jeweils eine Führungsschiene 33 bzw. 34 geführt und gehalten ist. Die Führungsschienen 33 und 34 sind mit schematisch angedeuteten Schrauben 33a, 34a an der Platte 9 befestigt. Bei dieser Ausführungsvariante wird der Tragteil 18 seitlich eingeschoben und in der gewünschten Stellung mit einer nicht dargestellten Schraube oder einem anderen Befestigungselement an der Platte 9 fixiert. Im übrigen entspricht diese Variante der zuvor beschriebenen.

Im Sinne der Erfindung ist es möglich, eine große Anzahl weiterer Ausführungsvarianten vorzusehen. So wäre es etwa in Abwandlung der Ausführungsvariante von Fig. 1 möglich, eine entsprechend ausgebildete Platte 9 mittels eines Teils der Schrauben 5 an der Halterung 1 des Reserverades 2 ohne Zwischenschaltung eines Flanschteils zu befestigen. Auf diese Weise kann die Anzahl der Bauteile verringert werden.

Die vorliegende Erfindung ermöglicht es, Lasten verschiedener Art mit einer Haltevorrichtung zu transportieren, die am Reservereifen eines entsprechenden Kraftfahrzeuges befestigbar ist. Dabei wird eine sichere, geräuscharme und weitgehend schwingungsfreie Halterung erreicht.

## Patentansprüche

1. Haltevorrichtung für Kraftfahrzeuge, die an einem außen angebrachten Reserverad (2) oder gemeinsam mit dem Reserverad (2) am Kraftfahrzeug zu befestigen ist, wobei eine Platte (9) durch Befestigungselemente (5, 6, 23) am Reserverad (2) oder an der Halterung (1) für das Reserverad (2) befestigbar ist, welche Platte (9) sich über einen überwiegenden Teil des Umfanges des Reserverades (2) auf diesem abstützt, **dadurch gekennzeichnct,** daß daß die Platte (9) Kupplungselemente (16, 17) für die Befestigung unterschiedlicher Tragteile (18) aufweist.

2. Haltevorrichtung nach Anspruch 1, **dadurch gekennzeichnet, daß** sich die Platte (9) am Rand der Felge (3) des Reserverades (2) abstützt.

3. Haltevorrichtung nach Anspruch 1, **dadurch gekennzeichnet, daß sich die Platte (9) am** Reifen (4) des Reserverades (2) abstützt.

4. Haltevorrichtung nach einem der Ansprüche 1 bis 3, **dadurch gekennzeichnet, daß** das Befestigungselement (6) für die Platte (9) als Stange oder Rohr (8) ausgebildet ist, das einen Flansch (7) aufweist, der gemeinsam mit dem Reserverad (2) an dem Kraftfahrzeug angeschraubt ist und daß auf die Stange oder das Rohr (8) ein Rohr (11) aufschiebbar und befestigbar ist, das einstückig mit der Platte (9) verbunden ist.

5. Haltevorrichtung nach Anspruch 4, **dadurch gekennzeichnet, daß** das Befestigungselement teleskopartig ausziehbar ist.

6. Haltevorrichtung nach einem der Ansprüche 1 bis 3, **dadurch gekennzeichnet, daß** das Befestigungselement (23) für die Platte (9) den Reifen (4) des Reserverades (2) umfaßt und an diesem befestigt ist.

7. Haltevorrichtung nach einem der Ansprüche 1 bis 6, **dadurch gekennzeichnet, daß** die Kupplungselemente der Platte (9) als Ausnehmungen (16, 17) zum Einhängen der Tragteile (18) ausgebildet sind.

8. Haltevorrichtung nach einem der Ansprüche 1 bis 6, **dadurch gekennzeichnet, daß** die Kupplungselemente der Platte (9) als Bolzen (31) zum Einhängen der Tragteile (18) ausgebildet ist.

9. Haltevorrichtung nach einem der Ansprüche 1 bis 6, **dadurch gekennzeichnet, daß** die Kupplungselemente der Platte (9) als Führungsschienen bzw. Laschen zum Einhängen der Tragteile (18) ausgebildet sind.

10. Haltevorrichtung nach einem der Ansprüche 1 bis 9, **dadurch gekennzeichnet, daß** die Platte (9) als Abdeckung für das Reserverad (2) ausgebildet ist.

## Claims

1. A holding device for motor vehicles which is to be secured to an externally mounted spare wheel (2) or together with said spare wheel (2) to the motor vehicle, wherein a plate (9) is securable to the spare wheel (2) or to the holding device (1) for the spare wheel (2) by securing elements (5, 6, 23), said plate (9) being supported over a major part of the spare wheel's circumference on said part, **characterized in that** the plate (9) is provided with coupling elements (16, 17) for securing various supporting parts (18).

2. The holding device according to claim 1, **characterized in that** the plate (9) is supported on the edge of the wheel rim (3) of spare wheel (2).

3. The holding device according to claim 1, **characterized in that** the plate (9) is supported on the tire (4) of the spare wheel (2) .

4. The holding device according to one of the claims 1 through 3, **characterized in that** the securing element (6) for the plate (9) is configured as a rod or a tube (8) provided with a flange (7) which is screwed to the motor vehicle together with the spare wheel (2) and that a tube (11) is adapted to be pulled over, and secured to, a rod or a tube (8), said tube (11) being connected to, and integral with, the plate (9).

5. The holding device according to claim 4, **characterized in that** the securing element is telescopically extendable.

6. The holding device according to one of the claims 1 through 3, **characterized in that** the securing element (23) for securing the plate (9) surrounds the tire (4) of the spare wheel (2) and is secured thereto.

7. The holding device according to one of the claims 1 through 6, **characterized in that** the coupling elements of the plate (9) are configured as recesses (16, 17) in which the supporting parts (18) can be nested.

8. The holding device according to one of the claims 1 through 6, **characterized in that** the coupling elements of the plate (9) are configured as bolts (31) for attaching the supporting parts (18).

9. The holding device according to one of the claims 1 through 6, **characterized in that** the coupling elements of the plate (9) are configured as guide rails or brackets for attaching the supporting parts (18).

10. The holding device according to one of the claims 1 through 9, **characterized in that** the plate (9) is configured as a cover for the spare wheel (2).

## Revendications

1. Dispositif de fixation pour des véhicules automobiles comportant une roue de secours (2) extérieure ou qui se fixe en commun avec la roue de secours (2) sur le véhicule, selon lequel :
une plaque (9) est fixée par des éléments de fixation (5, 6, 23) sur la roue de secours (2) ou le support (1) de la roue de secours (2), cette plaque (9) s'étendant sur la plus grande partie de la périphérie de la roue de secours (2) en s'appuyant contre celle-ci,
**caractérisé en ce que**
la plaque (9) comporte des éléments de couplage (16, 17) pour la fixation de différentes pièces de support (18).

2. Dispositif de fixation selon la revendication 1,
**caractérisé en ce que**
la plaque (9) s'appuie contre le bord de la jante (3) de la roue de secours (2).

3. Dispositif de fixation selon la revendication 1,
**caractérisé en ce que**
la plaque (9) s'appuie contre le pneumatique (4) de la roue de secours (2).

4. Dispositif de fixation selon l'une quelconque des revendications 1 à 3,
**caractérisé en ce que**
l'élément de fixation (6) de la plaque (9) est en forme de tige ou de tube (8) comportant une bride (7) vissée en commun avec la roue de secours (2) sur le véhicule, et
sur la barre ou le tube (8) s'engage, se fixe un tube (11) relié en une seule pièce avec la plaque (9).

5. Dispositif de fixation selon la revendication 4,
**caractérisé en ce que**
l'élément de fixation peut être sorti de manière télescopique.

6. Dispositif de fixation selon l'une quelconque des revendications 1 à 3,
**caractérisé en ce que**
l'élément de fixation (23) de la plaque (9) entoure le pneumatique (4) de la roue de secours (2) et est fixé à celui-ci.

7. Dispositif de fixation selon l'une quelconque des revendications 1 à 6,
**caractérisé en ce que**
les éléments de couplage de la plaque (9) sont réalisés sous la forme de découpes (16, 17) pour accrocher la pièce de support (18).

8. Dispositif de fixation selon l'une quelconque des revendications 1 à 6,
**caractérisé en ce que**
les éléments de couplage de la plaque (9) sont réalisés sous la forme de goujons (31) pour accrocher les pièces de support (18).

9. Dispositif de fixation selon l'une quelconque des revendications 1 à 6,
**caractérisé en ce que**
les éléments de couplage de la plaque (9) sont réalisés sous la forme de rails de guidage ou de pattes pour accrocher des pièces de support (18).

10. Dispositif de fixation selon l'une quelconque des revendications 1 à 9,
**caractérisé en ce que**
la plaque (9) constitue un capot pour la roue de secours (2).
